# EUROPEAN PATENT APPLICATION

(11) **EP 2 692 612 A1**
(43) Date of publication of application: **05.02.2014**
(21) Application number: 12178996.0
(22) Date of filing: 02.08.2012
(51) Int. Cl.: B62D 9/02, B62D 9/04, B62K 5/007, B62K 5/01, B62K 5/10, B60G 21/00

(54) **Wheeled vehicle**

(71) Applicant: Rawlinson, Rodney Ian, Bryanston, 2196 Sandton (ZA)
(72) Inventor: Rawlinson, Rodney Ian, Bryanston, 2196 Sandton (ZA)
(74) Representative: Fenlon, Christine Lesley

(57) **Abstract**

The invention relates to a wheeled vehicle 10, 150 which includes a chassis 12; a pair of laterally spaced front sub-frames 14, each of which is pivotally connected to the chassis 12 and pivotally displaceable relative thereto about laterally spaced longitudinally extending front pivot axes 42; and a pair of rear sub-frames 16 which are pivotally connected to the chassis 12 for pivotal displacement about laterally spaced longitudinally extending rear pivot axes 64. Front and rear wheels 48, 74 are rotatably mounted on each of the front and rear sub frames 14, 16. A front transverse member 50 is connected to the front sub-frames 14 to ensure synchronous tilting of the front sub-frames 14 relative to one another. A rear transverse member 76 is connected to the rear sub-frames 16 to ensure synchronous tilting of the rear sub-frames 16 relative to one another. A longitudinally extending connecting arrangement 78 interconnects the front and rear sub-frames 14, 16 to ensure synchronous tilting of the front and rear sub-frames 14, 16.

## Description

### FIELD OF INVENTION

THIS INVENTION relates to vehicles. More particularly it relates to wheeled vehicles.

### SUMMARY OF INVENTION

According to an embodiment of the invention there is provided a wheeled vehicle which includes
a chassis;
a pair of laterally spaced front sub-frames, each of which is pivotally connected to the chassis and pivotally displaceable relative thereto about laterally spaced longitudinally extending front pivot axes;
a front wheel rotatably mounted on each of the front sub frames for rotation about front axes of rotation;
a pair of rear sub-frames which are pivotally connected to the chassis for pivotal displacement about laterally spaced longitudinally extending rear pivot axes;
a rear wheel mounted on each of the rear sub-frames for rotation about rear axes of rotation;
at least one front transverse member connected to the front sub-frames to ensure synchronous tilting of the front sub-frames relative to one another;
at least one rear transverse member connected to the rear sub-frames to ensure synchronous tilting of the rear sub-frames relative to one another; and
a longitudinally extending connecting arrangement connected to and extending between the front and rear sub-frames to ensure synchronous tilting of the front and rear sub-frames.

Each front sub-frame may include a primary support which is pivotally connected to the chassis for pivotal displacement about the associated front pivot axis and a front suspension assembly which is pivotally connected to the primary support and which mounts one of the front wheels. The front transverse member may be elongate and pivotally connected at opposed ends thereof to the primary supports of the front sub-frames at positions which are between the connections of the primary supports to the chassis and the connections of the front suspension assemblies to the primary supports. Each front suspension assembly may include a telescopic fork arrangement which is pivotally connected to the primary support and which mounts the associated front wheel motorcycle fashion.

The vehicle typically includes a driver operable steering mechanism which is operatively connected to the front wheels to permit synchronous displacement of the front wheels about steering axes formed by the pivotal connection of the front fork arrangements to the primary supports.

The steering mechanism may include a steering column, a pair of tie rods, each of which has an inner end which is connected to the steering column and an outer end which is connected to the associated front fork arrangement at a position which is offset from a steering axis about which the front fork arrangement is pivotally displaceable.

The steering mechanism typically includes a motorcycle-type handle bar which is drivingly connected to the front forks.

The steering mechanism may include a mounting bracket which is fast with the steering column for displacement together with the steering column, the inner ends of the tie rods being connected to the bracket at transversely spaced apart positions, the steering mechanism further including two bushes, one of which is secured to each fork arrangement at a position offset from the steering axis and to which the outer ends of the tie rods are connected.

The steering mechanism may be configured such that the tie rods remain in register or parallel in operation depending on the degree of tilt of the front sub-frames.

In this way the Ackerman turning angle is consistently maintained at different leaning angles from the vertical.

Each tie rod may include at least two sections which are adjustable to permit the effective lengths of the tie rods to be adjusted.

Each rear sub-frame may include an elongate support which is connected at its one end to the chassis for pivotal displacement about the associated rear pivot axis and a rear suspension assembly connected to the support and which mounts one of the rear wheels. The rear suspension assembly may include a swing arm which mounts the associated rear wheel and which is pivotally connected at one end to the elongate support and a damper arrangement extending between the swing arm and the support.

The chassis may include a seat. The chassis may include a front portion and a rear portion which are interconnected by a central portion which is narrower than the front and rear portions permitting a driver sitting on the seat to position his feet on the ground on either side of the central portion between the front and rear portions. The vehicle may include footrests on which a driver sitting on the seat can rest his feet when the vehicle is in motion.

The vehicle typically includes a power source which is drivingly connected to at least one of the wheels and preferably to the rear wheels by a drive train.

The power source may be a motor which is connected by the drive train to the rear wheels for driving thereof. The motor is typically an engine, such as an internal combustion engine, or an electric motor.

The drive train may include a chain and sprocket arrangement. Instead, the drive train may include a drive shaft which connects the power source to the rear wheels through a differential and associated half shafts.

The power source may be an electric motor and the vehicle may include:
a battery electrically connected or connectable to the motor; and
a generator set for charging the battery, the chassis and generator set having complementary mounting formations whereby the generator set is dismountably mounted or mountable on the chassis to permit the vehicle to be operated with or without the generator set mounted thereon.

The generator set may include an electrical generator and an engine drivingly connected to the generator.

The vehicle may include a seat which is connected to the longitudinally extending connecting arrangement for synchronous tilting therewith.

Function controls of the vehicle may conveniently be provided on the handle bar, the controls typically including a twist grip throttle for the motor and a brake lever for operating brakes on the vehicle. These controls may conveniently function in a manner similar to that of conventional motorcycle or quad-bike controls.

### BRIEF DESCRIPTION OF THE DRAWINGS

The invention will now be described, by way of example, with reference to the accompanying diagrammatic drawings.

In the drawings:

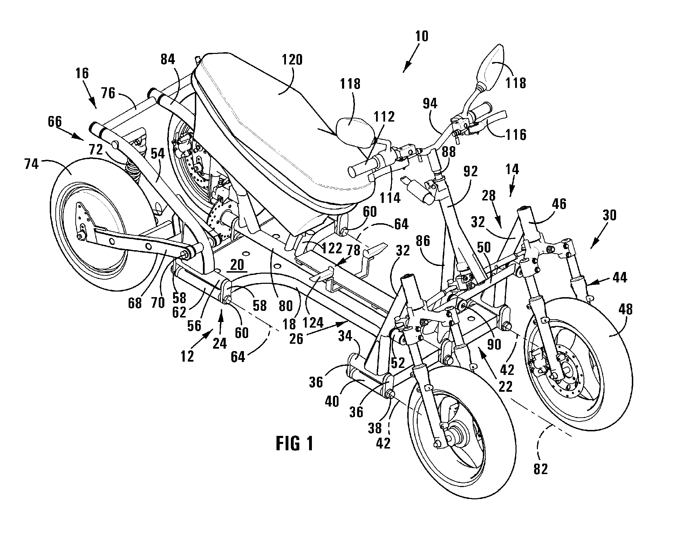

Figure 1 shows a three-dimensional view of a vehicle embodying the invention in an upright condition;
Figure 2 shows a front view of the vehicle of Figure 1 in an inclined configuration;
Figure 3 shows a three-dimensional view of part of a steering mechanism of the vehicle of Figure 1; and
Figure 4 shows a three-dimensional view, similar to Figure 1, of another vehicle embodying the invention.

### DETAILED DESCRIPTION OF PREFERRED EMBODIMENT

In the drawings, reference numeral 10 refers generally to a vehicle embodying the invention.

The vehicle 10 includes a chassis, generally indicated by reference numeral 12, a pair of laterally spaced front sub-frames 14 connected to the chassis 12 and a pair of laterally spaced rear sub-frames 16 mounted to the chassis 12.

The chassis 12 comprises a tubular frame 18 to which a floor plate 20 is mounted. The chassis 12 includes a front portion 22, a rear portion 24 which is longitudinally spaced from the front portion 22 and a central portion 26 which extends between the front and rear portions 22, 24. The central portion 26 has a width which is narrower than the width of the front portion 22 and the width of the rear portion 24, thereby effectively forming oppositely disposed lateral rebates or recesses within which a rider can place his feet between the front and rear portions 22, 24 as described in more detail herebelow.

Each front sub-frame 14 includes a primary support 28 and a front suspension assembly, generally indicated by reference numeral 30, which is connected to the primary support 28.

The primary support 28 includes an elongate tubular member 32, an operatively lower end of which is connected to a transverse member 34. A pair of parallel lugs 36 protrudes from opposite ends of the transverse member 34 and a pivot pin 38 extends through the lugs 36 and a sleeve 40 forming part of the frame 18 to permit pivotal displacement of the primary support 28 about a front pivot axis 42. The axes 42 of the two front sub-frames 14 are parallel.

The suspension assembly 30 includes a telescopic fork arrangement, generally indicated by reference numeral 44 which is pivotally connected to a sleeve 46 fast with the member 32 at an operatively upper end thereof. A front wheel 48 is rotatably mounted on the telescopic fork arrangement 44 motorcycle-fashion.

An elongate front transverse member 50 is pivotally connected at its ends by pivot pins 52 to the members 32 intermediate their ends. This ensures that displacement of the members 32 about their respective axes 42 occurs in a synchronous fashion.

Each rear sub-frame 16 includes an elongate member 54 having a transverse member 56 connected to an operatively lower end thereof. A pair of lugs 58 protrudes from the member 56 and is pivotally secured by a pivot pin 60 extending through the lugs 58 and a sleeve 62 forming part of the frame 18 for pivotal displacement about a rear pivot axis 64. The axes 64 of the two rear sub-frames 16 are parallel. A rear suspension assembly, generally indicated by reference numeral 66 is connected to the elongate member 54. The rear suspension assembly 66 includes a swing arm 68 which is pivotally connected at its one end to the member 54 by a pivot pin 70. A spring and damper arrangement 72 is connected between the swing arm 68 and the member 54. A rear wheel 74 is rotatably mounted on the swing arm 68 motorcycle-fashion.

A rear transverse member 76 is pivotally connected at its ends to the members 54 to ensure that displacement of the members 54 about the axes 64 occurs in a synchronous fashion.

The vehicle 10 includes a longitudinally extending connecting arrangement, generally indicated by reference numeral 78. The longitudinal extending connecting arrangement 78 includes an elongate tubular central member 80 which is pivotally connected to the chassis 12 for pivotal displacement about a longitudinal axis 82. The front pivot axes 42, the rear pivot axes 64, and the longitudinal axis are all parallel. A rear member 84 protrudes upwardly and rearwardly from the central member 80 and is pivotally connected at its upper end to the rear transverse member 76. A front member 86 protrudes upwardly from the central member 80 and supports a steering column 88. A lug 90 protrudes from the front member 86 intermediate the central member 80 and the steering column 88. The lug 90 is pivotally connected to the front transverse member 50.

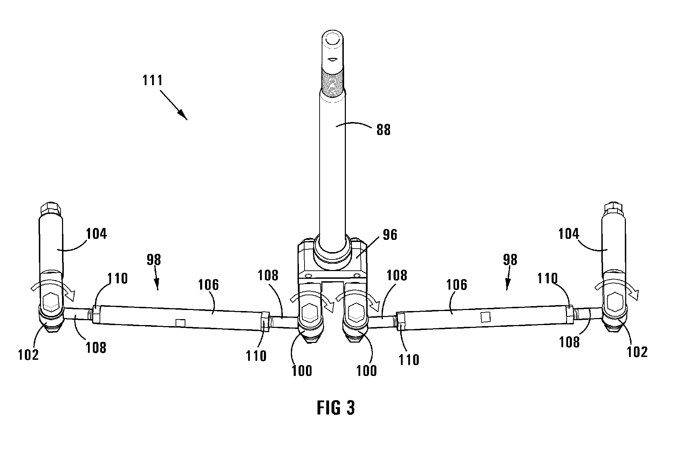

The steering column 88 extends through a sleeve 92 which is secured to the front member 86. A motorcycle-type handle bar 94 is connected to the upper end of the steering column 88. A lug/mounting bracket 96 (Figure 3) is connected to a lower end of the steering column 88. A pair of tie rods 98 each has an inner end 100 which is connected to the lug 96 and an outer end 102 which is connected to the associated fork arrangement 44. More particularly, a bush 104 is connected to each fork arrangement 44, the bush 104 being offset from the pivot pin 52.

Each tie rod 98 includes a central sleeve 106 and end members 108 which are screw-threadably engaged with the ends of the sleeve 106 and are locked releasably in position by locking nuts 110. This arrangement permits the effective length of tie rods 98 to be adjusted.

The handle bar 94 mounts conventional motorcycle-style function controls such as a twist grip throttle 112, brake lever 114, clutch lever 116 (if required) and rear view mirrors 118.

The steering column 88, handle bar 94, lug 96, bushes 104 and tie rods 98 together form a steering mechanism generally indicated by reference numeral 111 (refer especially to Figure 3).

The vehicle 10 includes a seat 120 which is secured to the central member 80 for pivotal displacement together with the central member 80 about the longitudinal axis 82. A power source, e.g. an internal combustion engine is supported on a frame 122 on which the seat 120 is mounted. The power source is drivingly connected to the rear wheel of the vehicle in any suitable fashion, e.g. by means of a chain and sprocket arrangement or by means of drive shafts which will typically incorporate a differential.

Motorcycle-style foot rests 124 are secured to the central member 80.

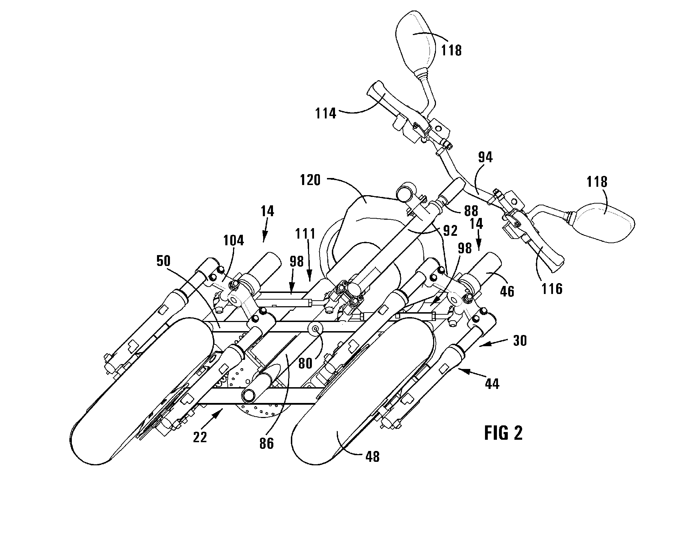

In use, a driver or rider will sit on the seat 120 and can lean the vehicle 10 in the manner of a motorcycle as shown in Figure 2 of the drawings. In this regard, as can clearly be seen in Figure 2 of the drawings, when the front and rear sub-frames 14, 16 are tilted relative to the chassis 12. The tie rods 98 and the front and rear transverse members 50, 76 are parallel. This, the Inventor believes, will have particularly beneficial consequences for the steering geometry with minimum influence on the so-called Ackermann turning angle.

A further particular advantage of the vehicle 10 is that the construction of the chassis 12 with the relatively narrower central portion 26, permits the rider to put his feet on the ground, e.g. at a stand-still relatively easily. In addition, the rider can lean without making contact with the floor plate 20 and can therefore make use of the foot rests 124 in a similar manner to that of a conventional motorcycle.

It will be appreciated that although the axes 42, 64 extend longitudinally, the spacing between them may vary to permit the front and rear wheel track distances to differ depending upon the intended application.

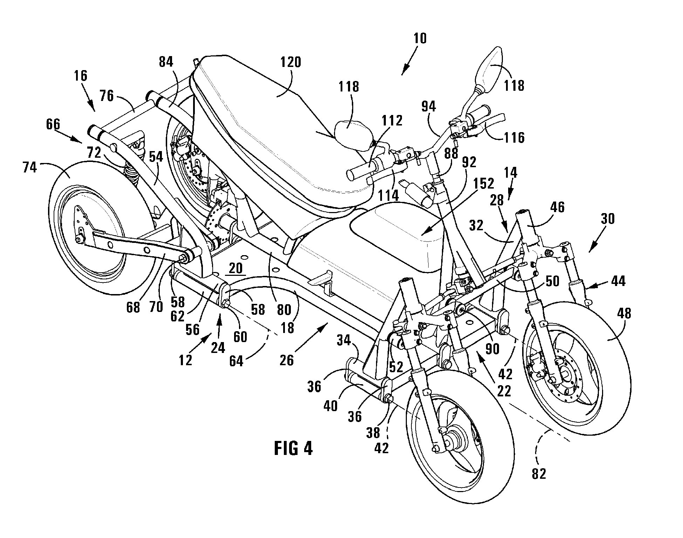

Reference is now made to Figure 4 of the drawings, in which reference numeral 150 refers generally to another vehicle embodying the invention. The vehicle 150 is similar to the vehicle 10 and the same reference numerals used above are used to designate similar parts. The main difference between the vehicle 150 and the vehicle 10 is that the vehicle 150 makes use of a power source in the form of an electric motor which is drivingly connected to one or both of the rear wheels 48, 74. A battery 151 is mounted on the seat frame to provide electrical energy to the motor.

If desired, a generator set, generally indicated by reference numeral 152 is dismountably mountable on the chassis. The generator set 152 includes an electrical generator which is electrically connectable to the battery in order to charge the battery and a power source, typically in the form of an internal combustion engine drivingly connected to the generator. Accordingly, when the batteries are fully charged and range is not an issue, the generator set can be removed from the chassis and the vehicle can be operated exclusively on battery power. If, however, the charge in the battery is relative low or an extended range is required, the generator set can be mounted on the chassis and by operating the internal combustion engine the generator is driven in order to charge the battery and extend the range of the vehicle.

## Claims

1. A wheeled vehicle 10, 150 which includes:
a chassis 12;
a pair of laterally spaced front sub-frames 14, each of which is pivotally connected to the chassis 12 and pivotally displaceable relative thereto about laterally spaced longitudinally extending front pivot axes 42;
a front wheel 48 rotatably mounted on each of the front sub frames 14 for rotation about front axes of rotation;
a pair of rear sub-frames 16 which are pivotally connected to the chassis 12 for pivotal displacement about laterally spaced longitudinally extending rear pivot axes 64;
a rear wheel 74 mounted on each of the rear sub-frames 16 for rotation about rear axes of rotation;
at least one front transverse member 50 connected to the front sub-frames 14 to ensure synchronous tilting of the front sub-frames 14 relative to one another;
at least one rear transverse member 76 connected to the rear sub-frames 16 to ensure synchronous tilting of the rear sub-frames 16 relative to one another; and
a longitudinally extending connecting arrangement 78 connected to and extending between the front and rear sub-frames 14, 16 to ensure synchronous tilting of the front and rear sub-frames 14, 16.

2. The vehicle 10, 150 of claim 1, wherein each front sub-frame 14 includes a primary support 28 which is pivotally connected to the chassis 12 for pivotal displacement about the associated front pivot axis 42 and a front suspension assembly 30 which is pivotally connected to the primary support 28 and which mounts one of the front wheels 48.

3. The vehicle 10, 150 of claim 2, wherein the front transverse member 50 is elongate and pivotally connected at opposed ends thereof to the primary supports 28 of the front sub-frames 14 at positions which are between the connections of the primary supports 28 to the chassis 12 and the connections of the front suspension assemblies 30 to the primary supports 28.

4. The vehicle 10, 150 of claim 2 or claim 3, wherein each front suspension assembly 30 includes a telescopic fork arrangement 44 which is pivotally connected to the primary support 28 and which mounts the associated front wheel 48 motorcycle fashion.

5. The vehicle 10, 150 of claim 4, wherein the vehicle 10, 150 includes a driver operable steering mechanism 111 which is operatively connected to the front wheels 48 to permit synchronous displacement of the front wheels 48 about steering axes formed by the pivotal connection of the front fork arrangements 44 to the primary supports 28.

6. The vehicle 10, 150 of claim 5, wherein the steering mechanism 111 includes a steering column 88, a pair of tie rods 98, each of which has an inner end 100 which is connected to the steering column 88 and an outer end 102 which is connected to the associated front fork arrangement 44 at a position which is offset from a steering axis about which the front fork arrangement 44 is pivotally displaceable.

7. The vehicle 10, 150 of claim 6, wherein the steering mechanism 111 includes a mounting bracket 96 which is fast with the steering column 88 for displacement together with the steering column 88, the inner ends 100 of the tie rods 98 being connected to the bracket 96 at transversely spaced apart positions, the steering mechanism 111 further including two bushes 104 , one of which is secured to each fork arrangement 44 at a position offset from the steering axis and to which the outer ends 102 of the tie rods 98 are connected.

8. The vehicle 10, 150 of claim 7, wherein the steering mechanism 111 is configured such that the tie rods 98 remain in register or parallel in operation depending on the degree of tilt of the front sub-frames 14.

9. The vehicle 10, 150 of claim 7 or claim 8, wherein each tie rod 98 includes at least two sections which are adjustable to permit the effective lengths of the tie rods 98 to be adjusted.

10. The vehicle 10, 150 of any of the preceding claims, wherein each rear sub-frame 16 includes an elongate support 54 which is connected at its one end to the chassis 12 for pivotal displacement about the associated rear pivot axis 64 and a rear suspension assembly 66 connected to the support and which mounts one of the rear wheels 74.

11. The vehicle 10, 150 of claim 10, wherein the rear suspension assembly 66 includes a swing arm 68 which mounts the associated rear wheel 74 and which is pivotally connected at one end to the elongate support 54 and a damper arrangement 72 extending between the swing arm 68 and the support 54.

12. The vehicle 10, 150 of any of the preceding claims, wherein the chassis 12 includes a front portion 22 and a rear portion 24 which are interconnected by a central portion 26 which is narrower than the front and rear portions 22, 24 permitting a driver sitting on a seat to position his feet on the ground on either side of the central portion 26 between the front and rear portions 22, 24.

13. The vehicle 10, 150 of any of the preceding claims, which includes a power source which is drivingly connected to at least one of the wheels.

14. The vehicle 10, 150 of claim 13, wherein the power source is an electric motor and wherein the vehicle 10, 150 includes:
a battery 151 electrically connected or connectable to the motor; and
a generator set 152 for charging the battery 151, the chassis 12 and generator set 152 having complementary mounting formations whereby the generator set 152 is dismountably mounted or mountable on the chassis 12 to permit the vehicle 10, 150 to be operated with or without the generator set 152 mounted thereon.

15. The vehicle 10, 150 of any of the preceding claims, which includes a seat 120 which is connected to the longitudinally extending connecting arrangement 78 for synchronous tilting therewith.
